**Europäisches Patentamt**

**European Patent Office**

**Office européen des brevets**

(19)

(11) Veröffentlichungsnummer : **0 477 422 B1**

(12)

# EUROPÄISCHE PATENTSCHRIFT

(45) Veröffentlichungstag der Patentschrift :
**11.08.93 Patentblatt 93/32**

(51) Int. Cl.⁵ : **B21B 37/06,** G05D 5/03,
G05D 15/01

(21) Anmeldenummer : **90118716.1**

(22) Anmeldetag : **28.09.90**

(54) **Haspel -Zugreglung.**

(43) Veröffentlichungstag der Anmeldung :
**01.04.92 Patentblatt 92/14**

(45) Bekanntmachung des Hinweises auf die
Patenterteilung :
**11.08.93 Patentblatt 93/32**

(84) Benannte Vertragsstaaten :
**DE FR GB IT**

(56) Entgegenhaltungen :
**WO-A-87/07049**
**CH-A- 353 436**
**DE-A- 2 027 249**
**DE-A- 3 925 104**
**FR-A- 1 415 556**
**GB-A- 2 166 569**

(73) Patentinhaber : **SIEMENS
AKTIENGESELLSCHAFT
Wittelsbacherplatz 2
W-8000 München 2 (DE)**

(72) Erfinder : **Berghs, Andre, Dipl.-Ing.
Egloffsteiner Weg 5
W-8524 Neunkirchen (DE)**
Erfinder : **Teltsch, Erwin, Dipl.-Ing.
Ebersbacher Weg 25
W-8524 Neunkirchen (DE)**
Erfinder : **Tomasic, Marko, Dipl.-Ing.
Obere Büch 18
W-8520 Buckenhof (DE)**
Erfinder : **Weihrich, Georg, Dr.-Ing.
Schleifweg 49
W-8525 Uttenreuth (DE)**
Erfinder : **Wohld, Dietrich, Dipl.-Ing.
Föhrenweg 25
W-8521 Bräuningshof (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Regelung eines Walzwerkhaspels gemäß dem Oberbegriff des Anspruchs 1 und eine Einrichtung gemäß dem Oberbegriff des Anspruchs 5.

Bei der Herstellung von metallischen Bändern in Walzwerken ist die Banddicke in nicht unerheblichem Maß von der während des Walzvorganges auftretenden Längszugkraft im Band abhängig. Daher ist eine Verkleinerung der Dickenabweichungen des Bandes über eine Verbesserung der Zugkraftregelung möglich. Bei eingerüstigen Kaltwalzwerken werden die Zugkräfte durch den Zug der beidseitig am Gerüst angeordneten Haspeln bestimmt.

Aus der DE-39 25 104 A1, die sich auf die Banddickenregelung bei eingerüstigen Kaltwalzgerüsten bezieht, ist eine Haspelregelung bekannt, die im Zusammenwirken mit den Regelparametern des Walzgerüstes zu guten Walzbanddickentoleranzen führt. Dabei wird der Bandzug zwischen dem Walzwerkhaspel und dem Walzgerüst durch einen auf das Walzgerüst wirkenden Zugregler geregelt; die Haspeldrehzahl wird mittles eines Drehzahlreglers geregelt, dessen Ausgangsgröße in Abhängigkeit von dem Sollwert und Istwert der Bandzugregelung korrigiert wird. Der Ausgleich schneller dynamischer Einflüsse ist nicht möglich.

Es ist nun Aufgabe der Erfindung, ein Verfahren und eine Einrichtung anzugeben, mit denen die bisher für Haspeln eingesetzten Zugkraftregelungen erheblich verbessert werden, so daß die Dickenabweichungen des erzeugten Bandes, insbesondere eines Kaltbandes, signifikant kleiner werden.

Die Aufgabe wird im Hinblick auf das eingangs angegebene Verfahren durch die Merkmale des Anspruchs 1 und bezüglich der Einrichtung durch die Merkmale des Anspruchs 5 gelöst. Diese Lösung erlaubt es, unter Ausnutzung der geringen Massenträgheitsmomente eines in den Haspel integrierten Antriebsmotors, auch sehr schnellen dynamischen Veränderungen der Walzwerkskomponenten zu folgen. In Verbindung mit einem, mit schnellen Leistungshalbleitern ausgestatteten, neuzeitlichen Umrichter, ist so eine optimal schnell an die jeweiligen Betriebszustände angepaßte Zugregelung mit ihrer positiven Folge sehr kleiner Dickenabweichungen möglich.

Dabei ist es durch die relativ einfache Maßnahme, bestehend darin, daß das Ausgangssignal des Zugreglers, zur hochdynamischen Anpassung, mit dem Drehzahlistwert des Haspelantriebsmotors verglichen und die Differenz einem Drehzahlregler aufgegeben wird, der den Momensollwert des Antriebsmotos bildet, in überraschender Weise möglich, das dynamische Verhalten der Zugkraftregelung derart zu verbessern, daß auch die bisher durch eine Dämpfung oder Mittelwertbildung nur unzureichend ausgeglichenen Einflüsse ausgeregelt werden können. Die hochdynamische Anpassung erfolgt dabei vorzugsweise digital, da so vorteilhaft eine Analog-Digitalumsetzung vermieden werden kann. Die Verwendung eines analogen Drehzahlreglers ist jedoch möglich.

Zur weiteren Verbesserung der Regelung werden dem Zugregler Walzdaten, wie Gerüstauffederung, Materialhärte, Walzwirkungsgrad, Federkonstanten, etc. über ein Streckenmodell aufgegeben. Hierdurch können sehr vorteilhaft die dynamischen Einflüsse der einzelnen Komponenten des Walzvorgangs berücksichtigt werden, desgleichen die z.B. aus Materialunterschieden herrührenden Änderungen. Ensprechende Streckenmodelle und ihre mathematische Behandlung sind aus der allgemeinen Walzwerkstechnik bekannt und daher nicht Gegenstand dieser Anmeldung. Das gleiche gilt für die verwendeten Regler und die digitale oder analoge Signalverarbeitung.

Bei der erfindungsgemäßen Einrichtung wird die vorteilhafte hochdynamische Anpassung des Haspelmoments an die erforderliche Zugkraft zur Erzielung eines Bandes mit annähernd konstanter Dicke durch einen dem Zugregelkreis unterlagerten Drehzahlregelkreis bewirkt, wobei dem Zugregler vorzugsweise Daten durch eine Streckenmodell aufgegeben werden.

Der Antriebsmotor ist vorteilhaft als Drehstromsynchronmotor ausgebildet. Dieser Motortyp ist besonders für eine schnelle Regelung geeignet und besitzt geringe Massenträgheitsmomente, so daß die durch die hochdynamische Regelung erreichten Vorteile motorseitig erhalten bleiben.

Weitere Vorteile und Einzelheiten ergeben sich aus der nachfolgenden Beschreibung eines Ausführungsbeispiels, anhand der Zeichnungen und in Verbindung mit den Unteransprüchen.

Dabei zeigen:

FIG 1       eine Prinzipdarstellung eines eingerüstigen Walzwerks
                und

FIG 2       ein Schaltschema der Regelung.

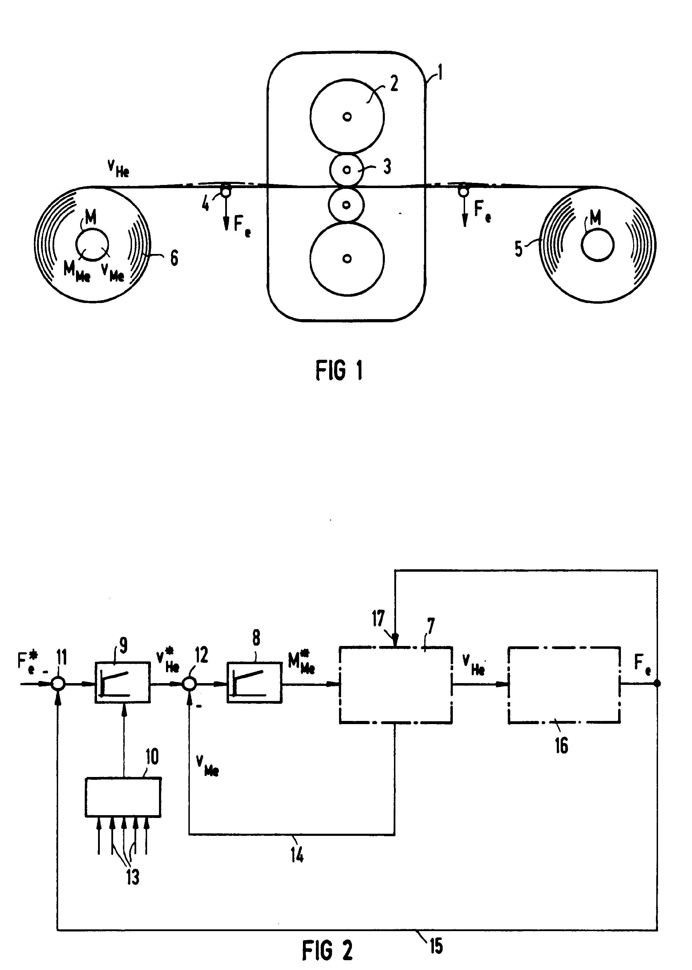

In FIG 1 bezeichnet 1 ein Walzgerüst mit Stützwalzen 2 und Arbeitswalzen 3, deren Zahl groß sein kann. Beidseitig vom Walzgerüst 1 befinden sich die Haspeln 5 und 6, die im Reversierbetrieb abwechselnd als Auf- und Abhaspeln dienen. Die Zugkräfte in dem zwischen den Haspeln 5 und 6 bewegten Band werden durch Zugkraftmeßgeräte 4 gemessen, die von allgemein in der Walzwerkstechnik bekannter Ausgestaltung sind.

Die Haspeln 5 und 6 werden durch integrierte Antriebsmotore angetrieben, die durch die mit M bezeichneten Kreise symbolisiert sind. Durch die integrierten Antriebsmotore, vorzugsweise in Gestalt von Synchronmotoren mit Umrichtern, ergibt sich eine besonders günstige Beeinflußbarkeit des Haspeldrehmoments, da das Trägheitsmoment der bewegten Massen klein ist. Gleichzeitig ist durch Halbleiterumrichter eine schnelle Ansteuerbarkeit gegeben.

In FIG 2 bezeichnet 7 die Antriebseinheit, (Motor, Umrichter, Stromregler etc.), des Abhaspels und 16 die Einlaufstrecke zwischen Abhaspel und Walzgerüst. Die Zugkraft $F_e$ der Einlaufstrecke wird der Eingangsseite des Zugreglers 9 aufgegeben. Zusammen mit dem Zugkraftsollwert $F_e^*$ ergibt sich der Regelkreis 15 für die Zugregelung, in dem der Istwert-Sollwertvergleich vorgenommen wird. Gleichzeitig wirkt die Zugkraft $F_e$ direkt als Belastung für den Abhaspelantriebsmotor. Dies ist durch den Pfeil 17 angedeutet, da sie regeltechnisch wirksam ist.

Dem Zugregler 9, der wahlweise als Digital oder Analogregler ausgebildet sein kann, werden Walzdaten 13 über ein Streckenmodell 10 aufgegeben um die Zugregelung an die Bedingungen des Materials und der Walzstraße anzupassen. Der Zugregler 9 liefert einen Sollwert $v_{He}^*$ für den unterlagerten Regelkreis 14 mit dem Drehzahlregler 8, so daß im Drehzahlregler 8, ein hochdynamischer Regler, der sehr vorteilhaft ohne die große Dämpfung arbeiten kann, die nach dem Stand der Technik bisher für Haspelregelungen notwendig war, der Abhaspelmotor-Drehmomentsollwert $M_{Me}^*$ gebildet werden kann. Dieser Drehmomentsollwert bildet zusammen mit dem Zugkraftistwert $F_e$ den Regelkreis 15 für den Antriebsmotor des Abhaspelantriebs. Durch die Sollwertbildung über die zwei Regelkreise 14 und 15 ergibt sich in Verbindung mit dem hochdynamischen Drehzahlregler 8 eine Regelung für den Antriebsmotor des Abhaspels, die den Erfordernissen eines derartigen Antriebs in bisher unerreichter Weise Rechnung trägt.

In FIG 2 und in der Beschreibung ist lediglich die Einlaufseite des Walzgerüstes mit ihren Regelkreisen erläutert, es versteht sich, daß die Regelung des Aufhaspels 5 entsprechend aufgebaut ist und daß entsprechend der Walzrichtung jeweils bremsend oder antreibend gearbeitet wird.

## Patentansprüche

1. Verfahren zur Regelung eines Walzwerkhaspels (5, 6) mit einem, insbesondere integrierten Antriebsmotor (M) unter Verwendung eines Regelkreises (14) mit einem Zugregler (9) und eines weiteren Regelkreises (15) mit einem Drehzahlregler (8), der aus einer ihm zugeführten Differenz zwischen einem Drehzahlistwert ($v_{Me}$) und einem Drehzahlsollwert ($v_{He}^*$) des Antriebsmotors (M) einen Momentensollwert ($M_{Me}^*$) für den Antriebsmotor (M) bildet,
   **dadurch gekennzeichnet,**
   daß von dem Zugregler (9) als Ausgangssignal der Drehzahlsollwert ($v_{He}^*$) gebildet wird und daß die Drehzahlregelung durch den Regelkreis (14) der Zugregelung durch den Regelkreis (15) unterlagert wird.

2. Verfahren nach Anspruch 1,
   **dadurch gekennzeichnet,**
   daß die Drehzahlregelung digital erfolgt.

3. Verfahren nach Anspruch 1 oder 2,
   **dadurch gekennzeichnet,**
   daß dem Zugregler (9) Walzdaten, wie Gerüstauffederung, Materialhärte, Walzwirkungsgrad etc. über ein Streckenmodell (10) aufgegeben werden.

4. Verfahren nach einem vorhergehenden Ansprüche,
   **dadurch gekennzeichnet,**
   daß als Antriebsmotor (M) ein Drehstromsynchronmotor verwendet wird.

5. Einrichtung zur Regelung eines Walzwerkhaspels (5, 6) mit einem, insbesondere integrierten Antriebsmotor (M), einem Regelkreis (14) mit einem Zugregler (9) und einem weiteren Regelkreis (15) mit einem Drehzahlregler (8), dem eine Differenz zwischen einem Drehzahlistwert ($v_{Me}$) und einem Drehzahlsollwert ($v_{He}^*$) des Antriebsmotors (M) zugeführt ist und der einen Momentensollwert ($M_{Me}^*$) für den Antriebsmotor (M) erzeugt,
   **dadurch gekennzeichnet,**
   daß der Zugregler (9) zur Erzeugung eines dem Drehzahlsollwert ($v_{He}^*$) entsprechenden Ausgangssignals ausgebildet ist und daß der Regelkreis (14) zur Drehzahlregelung dem weiteren Regelkreis (15) zur Zugregelung unterlagert ist.

6. Einrichtung nach Anspruch 5,
   **dadurch gekennzeichnet,**
   daß der Zugregler (9) ein Digitalregler ist.

7. Einrichtung nach Anspruch 5 oder 6,
   **dadurch gekennzeichnet,**
   daß sie ein Streckenmodell (10) aufweist, über das dem Zugregler (9) Walzdaten, wie Gerüstauffederung,
   Materialhärte, Walzwirkungsgrad etc. aufgebbar sind.

8. Einrichtung nach Anspruch 5, 6 oder 7,
   **dadurch gekennzeichnet,**
   daß der Antriebsmotor (M) als Drehstromsynchronmotor ausgebildet ist.


**Claims**

1. Method for controlling a rolling mill reel (5, 6) having a drive motor (M), in particular an integrated drive motor, with the use of a control loop (14) having a tension regulator (9) and a further control loop (15) having a speed regulator (8), which generates a setpoint value of moment ($M*_{Me}$) for the drive motor (M) from a supplied difference between an actual value of speed ($v_{Me}$) and a setpoint value of speed ($v*_{He}$) of the drive motor (M), characterised in that the setpoint value of speed ($v*_{He}$) is generated by the tension regulator (9) as an output signal and in that the speed regulation by means of the control loop (14) is subordinated to the tension regulation by means of the control loop (15).

2. Method according to claim 1, characterised in that the speed regulation takes place digitally.

3. Method according to claim 1 or 2, characterised in that rolling data such as support structure resilience, material hardness, degree of rolling efficiency etc. are fed to the tension regulator (9) by way of a system model (10).

4. Method according to a preceding claim, characterised in that a three-phase synchronous motor is used as the drive motor (M).

5. Device for controlling a rolling mill reel (5, 6) having a drive motor (M), in particular an integrated drive motor, a control loop (14) having a tension regulator (9) and a further control loop (15) having a speed regulator (8), to which there is supplied a difference between an actual value of speed ($v_{Me}$) and a setpoint value of speed ($v*_{He}$) of the drive motor (M), and which generates a setpoint value of moment ($M*_{Me}$) for the drive motor (M), characterised in that the tension controller (9) is constructed for generating an output signal corresponding to the setpoint value of speed ($v*_{He}$), and in that the control loop (14) for the speed regulation is subordinated to the further control loop (15) for the tension regulation.

6. Device according to claim 5, characterised in that the tension regulator (9) is a digital regulator.

7. Device according to claim 5 or 6, characterised in that it has a system model (10), by way of which rolling data such as support structure resilience, material hardness, degree of rolling efficiency etc. can be fed to the tension regulator (9).

8. Device according to claim 5, 6 or 7, characterised in that the drive motor (M) is constructed as a three-phase synchronous motor.


**Revendications**

1. Procédé pour régler un dévidoir (5,6) de laminoir comportant un moteur d'entraînement (M), notamment intégré, et utilisant un circuit de réglage (14) comportant un régulateur de traction (9) et un autre circuit de réglage (15) comportant un régulateur (8) de la vitesse de rotation qui forme, à partir d'une différence, qui lui est envoyée, entre une valeur réelle ($v_{Me}$) de la vitesse de rotation et une valeur de consigne ($v*_{He}$)

de la vitesse de rotation du moteur d'entraînement (M), une valeur de consigne instantanée (M*$_{Me}$) pour le moteur d'entraînement (M), caractérisé par le fait que la valeur de consigne (v*$_{He}$) de la vitesse de rotation est formée par le régulateur de traction (9) en tant que signal de sortie et que la régulation de la vitesse de rotation est subordonnée, par le circuit de régulation (14), à la régulation de traction par le circuit de réglage (15).

2. Procédé suivant la revendication 1, caractérisé par le fait que la régulation de la vitesse de rotation s'effectue numériquement.

3. Procédé suivant la revendication 1 ou 2, caractérisé par le fait que des données de laminage, comme par exemple la suspension de la cage, la dureté du matériau, le rendement de laminage, etc., sont envoyées au régulateur de traction (9) par l'intermédiaire d'un modèle de section (10).

4. Procédé suivant l'une des revendications précédentes, caractérisé par le fait qu'on utilise comme moteur d'entraînement (M) un moteur triphasé synchrone.

5. Dispositif pour régler un dévidoir (5,6) de laminoir, comportant un moteur d'entraînement (M), notamment intégré, un circuit de réglage (14) comportant un régulateur de traction (9) et un autre circuit de réglage (14) comportant un régulateur (8) de la vitesse de rotation, auquel est envoyée une différence entre la valeur réelle (v$_{Me}$) de la vitesse de rotation et une valeur de consigne (v*$_{He}$) de la vitesse de rotation du moteur d'entraînement (M), qui produit une valeur de consigne instantanée (M*$_{Me}$) pour le moteur d'entraînement (M), caractérisé par le fait que le régulateur de traction (9) est conçu de manière à produire un signal de sortie qui correspond à la valeur de consigne (v*$_{He}$) de la vitesse de rotation et que le circuit de réglage (14) servant à régler la vitesse de rotation est subordonné à l'autre circuit de réglage (15) servant à régler la traction.

6. Dispositif suivant la revendication 5, caractérisé par le fait que le régulateur de traction (9) est un régulateur numérique.

7. Dispositif suivant la revendication 5 ou 6, caractérisé par le fait qu'il possède un modèle de section (10), au moyen duquel des données de laminage, comme par exemple la suspension de la cage, la dureté du matériau, le rendement de laminage, etc., peuvent être envoyées au régulateur de traction (9).

8. Dispositif suivant la revendication 5, 6 ou 7, caractérisé par le fait que le moteur d'entraînement (M) est réalisé sous la forme d'un moteur triphasé synchrone.

FIG 1

FIG 2